# EUROPÄISCHE PATENTSCHRIFT

(11) **EP 2 777 103 B1**
(45) Veröffentlichungstag und Bekanntmachung des Hinweises auf die Patenterteilung: **11.09.2019**
(21) Anmeldenummer: 12813100.0
(22) Anmeldetag: 09.11.2012
(51) Int. Cl.: H01R 43/28, B21F 11/00, B65G 57/18, B65H 35/00

(54) **KABELSAMMELVORRICHTUNG (WIRE STACKER)**
CABLE-GATHERING DEVICE (WIRE STACKER)
DISPOSITIF DE GROUPAGE DE CÂBLES ("WIRE STACKER")

(30) Priorität: 11.11.2011 CH 18102011
(43) Veröffentlichungstag der Anmeldung: 17.09.2014
(73) Patentinhaber: Schleuniger Holding AG, 3608 Thun (CH)
(72) Erfinder: WORTMANN, Thomas, verstorben (DE)
(74) Vertreter: Patentbüro Paul Rosenich AG
(86) Internationale Anmeldenummer: PCT/IB2012/056305
(87) Internationale Veröffentlichungsnummer: WO 2013/068986

(56) Entgegenhaltungen:
- EP-A2- 0 788 200
- DE-A1- 19 624 973
- US-A- 4 095 497
- US-A- 5 816 384

## Beschreibung

Die Erfindung bezieht sich auf eine Kabelsammelvorrichtung zur Verarbeitung von elektrischen oder optischen Leitungen, wie Drähten, Kabeln, Leitungsbündel, Lichtleitfasern, etc., gemäss dem Oberbegriff des Anspruch 1.

Im Stand der Technik sind Kabelverarbeitungsvorrichtungen bekannt, bei denen fertig konfektionierte Kabel auf eine temporäre Ablage einer Kabelsammelvorrichung (wire stacker) gelegt bzw. auf diese abgeworfen und dort gesammelt werden. Ist eine bestimmte Anzahl von Kabeln auf der temporären Aufnahme gesammelt, wird die Ablage nach unten gekippt, sodass die Kabeln von der Ablage nach unten rutschen, um in einem eigens dafür vorgesehenen Behälter (Entnahmerinne) zu landen, wo sie von ausserhalb der Kabelverarbeitungsvorrichtung zugänglich sind.

Der Nachteil einer derartigen Konstruktion besteht darin, dass aufgrund des nach unten Fallens der Kabel von der temporären Ablage in eine separate Entnahmerinne die Kabeln in einen Bereich gelangen, der für eine Bedienperson ergonomisch nur mit Mühe und ständigem Bücken erreichbar ist, nämlich in bodennahem Bereich. Eine entsprechende Höhenstaffelung der kippbaren Ablage und der darunter angeordneten Entnahmerinne erfordert jedoch erhöhten Konstruktionsaufwand.

Eine derartige Vorrichtung offenbart beispielsweise die US 3,839,777 A. Eine Drahtführungsanordnung umfasst eine schwenkbare rinnenförmige Aufnahme für Drahtbündel, wobei die Drahtbündel durch nach unten Kippen der Aufnahme freigegeben werden können. Der Schwerpunkt der Aufnahme ist dabei derart nach aussen verlagert, dass die Aufnahme bereits allein durch die Wirkung der Gravitation nach unten kippen kann.

In der EP 0788200 A1 ist eine Kabelablagevorrichtung offenbart, zur gleichzeitigen getrennten Ablage von zwei einzelnen zugeschnittenen und ausgestreckten Kabeln und zur Separierung dieser Kabel nach deren Bearbeitung. Die Vorrichtung weist unter anderem eine Kabelauswerferanordnung auf, wobei unterhalb von zwei Kabelabwurflängsseiten von mittels einer Trennwand voneinander getrennten Aufnahme- und Streckbereichen und über deren gesamte Länge sich erstreckend je eine Kabelablagewanne vorgesehen ist. Insbesondere sind mindestens drei, vorzugsweise vier, Kabelablagewannenpaare schaufelradartig um eine parallel zu den beiden Aufnahme- und Streckbereichen sich jeweils um den von einem Wannenpaar erfassten Winkelbereich erstreckende Drehachse schrittweise drehbar angeordnet sind.

Die US 4095497 A beschreibt eine Vorrichtung mit abschaltbarer Kabelsammelwanne, die bei Erreichen einer Losgrösse nach unten in Richtung des Maschinengestells kippt, wobei die gesammelten Kabel aus der Wanne nach unten fallen. Durch das Kippen der Wanne in Richtung der Maschine rutschen die Kabel näher zur Maschine.

Die DE 19624973 A1 hat eine Kabelablageeinrichtung zum Gegenstand, bestehend aus Transportband, nach unten kippbarer Losgrössen-Sammelwanne und darunter angeordneter Ablagewanne. Das Kabel wird auf dem Transportband über die Gesamtlänge in einem Führungstunnel mit Seitenschenkeln umschlossen und kann derart nicht seitlich vom Transportband herunterfallen. Erst wenn das Kabel komplett abgelängt ist, wird der Führungstunnel über die gesamte Länge seitlich horizontal verfahren, das Kabel vom Transportband "abgeschoben", wobei es in einen Auffangbehälter fallen kann.

Die Erfindung setzt sich zum Ziel, eine Kabelsammelvorrichtung (wire stacker) bereitzustellen, die die oben erwähnten Nachteile nicht aufweist und eine ergonomisch abgestimmte Entnahme der Leitungen ermöglicht, die gleichzeitig eine platzsparende und bedienerfreundliche Konstruktion aufweist und die mit einfachen Verfahrensschritten auskommt. Gleichzeitig soll für die Bedienperson, die die Kabeln entnimmt, ein hohes Mass an Sicherheit gewährleistet sein.

Die Erfindung löst diese Aufgabe mit einer Kabelsammelvorrichtung (wire stacker) der eingangs genannten Art dadurch, dass zum Kippen der Plattform ein Aktuator vorgesehen ist, wobei durch Betätigen des mit der Plattform zusammenwirkenden Aktuators der Kippvorgang nach unten und das Wiederzurückschwenken nach oben ermöglicht ist.

Aufgrund der Tatsache, dass die kippbare Plattform einen eigenen Aufnahmebereich und einen eigenen Entnahmebereich aufweist, kann der Prozessbereich der Kabelsammelvorrichtung (wire stacker) vom Entnahmebereich räumlich getrennt werden, wodurch ein hoher Sicherheitsstandard geschaffen wird. Das zusätzliche Haltemittel im Entnahmebereich verhindert, dass die Leitungen beim Kippen der Plattform von dieser herunterfallen. Die Leitungen werden also im Entnahmebereich zuverlässig gehalten. Ein anschliessendes nach oben Schwenken der Plattform bewirkt dann, dass die im Entnahmebereich gehaltenen Leitungen in eine Höhe zurückgelangen, in der die Leitungen von ausserhalb der Kabelsammelvorrichtung (wire stacker) in ergonomischer Hinsicht optimal zugänglich sind. Ein weiterer Vorteil der Erfindung besteht darin, dass der Verarbeitungsvorgang während des Entnehmens der Leitungen aus dem Entnahmebereich nicht gestoppt werden muss. Dies wird durch die gesonderten Aufnahme- und Entnahmebereiche gewährleistet.

Die Erfindung zeichnet sich durch einen geringen apparativen Aufwand aus. Eine gesonderte Entnahmerinne wie im Stand der Technik ist nicht erforderlich, wodurch sich auch die Teileanzahl und die Kosten reduzieren. Die Anwendungsgebiete der Erfindung sind vielfältig. So kann die Plattform als Ablage für Leitungstwister nach dem Verdrillvorgang dienen, aber auch im Zusammenhang mit einem Transportband eingesetzt werden. Die erfindungsgemässe Plattform kann in Abisoliermaschinen, Krimpvorrichtungen, Verdrillvorrichtungen, etc. zur Anwendung kommen.

Die Erfindung erlaubt eine Entnahme von fertigen Leitungen aus einer Kabelverarbeitungsmaschine in ergonomischer Höhe. Dabei kann gleichzeitig hinter einer Schutzhaube weiter automatisch produziert und das fertige Gut auf dieselbe Plattform im Aufnahmebereich abgeworfen werden. Durch die Ausformung einer Schutzhaube und der Plattform (gesonderter Aufnahmebereich) kann eine Gefährdung des Bedieners durch den Bearbeitungsprozess effizient verhindert werden.

Bevorzugt liegen der Aufnahmebereich und der Entnahmebereich während der Verarbeitung der Leitungen in nach oben geschwenkter Position im Wesentlichen in gleicher Höhe.

In einer bevorzugten Ausführungsform ist das Haltemittel an der Plattform befestigt, wodurch sich eine besonders kompakte und einfache Konstruktion ergibt.

In einer Ausführungsform bildet die Plattform den Boden einer Wanne. In der Wanne sind die Leitungen durch Seitenwände vor unerwünschtem Herabfallen gesichert.

In einer Ausführungsform ist das Haltemittel durch eine Seitenwand der Wanne gebildet. Die Seitenwand der Wanne dient somit gleichzeitig dazu, das nach unten Gleiten der Leitungen im gekippten Zustand der Plattform zu begrenzen und die Leitungen im Entnahmebereich zu halten.

In einer Ausführungsform ist die Plattform um eine im Wesentlichen horizontale Drehachse schwenkbar. Damit kann eine besonders einfache Realisierung der Kippbewegung erzielt werden. Die Drehachse ist im Wesentlichen parallel zur Längserstreckung der Plattform, in die die Leitungen ihrer Länge nach gelangen.

In einer bevorzugten Variante dieser Ausführungsform ist die Drehachse im Bereich der Unterseite des Aufnahmebereiches vorgesehen. Dadurch gelangen auch während des Kippvorgangs keine Teile der Plattform bzw. Wanne in den Prozessbereich der Kabelsammelvorrichtung (wire stacker).

In einer weiteren erfindungsgemässen Ausführungsform greift der Aktuator im Bereich der Unterseite des Entnahmebereiches an. Vorzugsweise ist dazu ein pneumatischer Aktuator vorgesehen. Diese Massnahme erlaubt eine platzsparende Konstruktion.

In einer Ausführungsform weist die Kabelsammelvorrichtung (wire stacker) eine vorzugsweise durchsichtige Trennwand auf, die einen Prozessbereich von einem Bedienbereich trennt und von oben in Richtung Plattform ragt, wodurch die Sicherheit einer Bedienperson zuverlässig und nachhaltig gewährleistet wird.

In einer Ausführungsform reicht die Trennwand zumindest teilweise in die Wanne zwischen Aufnahmebereich und Entnahmebereich hinein, wodurch die Sicherheit weiter erhöht wird.

In einer Ausführungsform weist im Entnahmebereich der Boden der Plattform eine Vertiefung auf, um dort die Leitungen besser in Position zu halten. Beim nach oben Schwenken der Plattform mit den im Entnahmebereich befindlichen Leitungen verhindert die Vertiefung, dass die äussersten Leitungen des Leitungsbündels wieder in den anschliessenden Aufnahmebereich zurückkollern.

In einer Ausführungsform ist die Plattform im Aufnahmebereich im Wesentlichen eben, wodurch das Abgleiten der Leitungen in den Entnahmebereich erleichtert wird.

In einer Ausführungsform ist die Kabelsammelvorrichtung (wire stacker) eine Kabelverdrillvorrichtung und die Plattform zur Aufnahme der verdrillten Kabel vorgesehen.

Die Erfindung bezieht sich auch auf ein Verfahren zum Entnehmen von elektrischen oder optischen Leitungen, wie Drähten, Kabeln, Leitungsbündel, Lichtleitfasern, etc., aus einer Kabelsammelvorrichtung (wire stacker) mit einer nach unten kippbaren Plattform, die einen Aufnahmebereich zum Aufnehmen einer oder mehrerer Leitungen nach einem Verarbeitungsschritt aufweist, wobei die Plattform einen an den Aufnahmebereich anschliessenden Entnahmebereich aufweist, wobei im Aufnahmebereich befindliche Leitungen durch nach unten Kippen der Wanne in den Entnahmebereich gebracht werden und in der gekippten Position der Plattform durch Haltemittel im Entnahmebereich gehalten werden, und dass die Leitungen aus dem Entnahmebereich entnommen werden.

Erfindungsgemäss wird die Plattform vor dem Entnehmen der Leitungen aus dem Entnahmebereich wieder nach oben gekippt. Dadurch werden die Leitungen zur Entnahme in eine ergonomisch optimale Höhe gehoben, während gleichzeitig im Prozessbereich und im Aufnahmebereich der Plattform Leitungen gefertigt und abgeworfen werden können.

Weitere Ausbildungen der Erfindung sind in den Figuren und in den abhängigen Patentansprüchen angegeben. Die Bezugszeichenliste ist Bestandteil der Offenbarung.

Anhand von Figuren wird die Erfindung symbolisch und beispielhaft näher erläutert. Es zeigen dabei
- Fig. 1: eine erfindungsgemässe Kabelsammelvorrichtung (wire stacker) mit einer unterhalb des Prozessbereichs angeordneten kippbaren Plattform,
- Fig. 2: eine Vorrichtung gemäss Fig. 1 mit der Plattform in gekipptem Zustand,
- Fig. 3: eine Vorrichtung gemäss Fig. 1 mit wieder nach oben geschwenkter Plattform zur Entnahme der Leitungen aus dem Entnahmebereich.

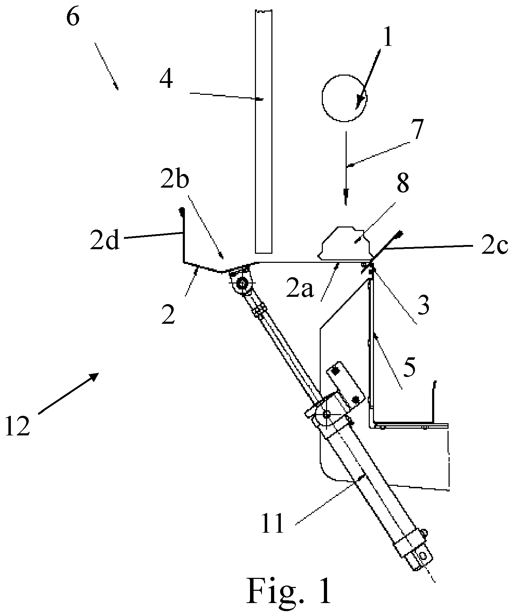

Fig. 1 zeigt eine erfindungsgemässe Kabelsammelvorrichtung (wire stacker) 12 zum Verarbeiten von elektrischen oder optischen Leitungen 8. Der Verarbeitungs- oder Prozessbereich 1, in dem die Leitungen 8 verarbeitet werden, z.B. abisoliert, gekrimpt, verdrillt, gebündelt, etc., ist nur schematisch durch einen Kreis dargestellt. Sind die Leitungen 8 nach einem Verarbeitungsschritt fertig konfiguriert, gelangen sie auf den Aufnahmebereich 2a einer Plattform 2 (werden z.B. auf diesen abgeworfen). Die Fallrichtung 7 vom Prozessbereich 1 auf den Aufnahmebereich 2a der Plattform 2 ist mittels eines Pfeiles dargestellt. Die Leitungen 8 werden dabei ihrer Länge nach von der Plattform 2 aufgenommen. Die Leitungen 8 kommen dabei im Wesentlichen parallel zur Längserstreckung der Plattform 2 zu liegen. Bei den dargestellten Figuren erstrecken sich die Leitungen 8 demnach im Wesentlichen senkrecht zur Blattebene.

Die Plattform 2 ist an einem Maschinengestell 5 gelagert und lässt sich nach unten kippen. Dazu ist sie um eine im Wesentlichen horizontale Drehachse 3 schwenkbar. Das Betätigen eines mit der Plattform 2 zusammenwirkenden Aktuators 11 ermöglicht den Kippvorgang nach unten und das Wiederzurückschwenken nach oben. In der dargestellten Ausführungsform ist der Aktuator 11 eine pneumatisch betätigbare Kolben-Zylinder-Einheit, die unterhalb der Plattform 2 angeordnet ist. Die Verlängerung der Kolbenstange greift dabei im Bereich der Unterseite des Entnahmebereiches 2b über eine im Wesentlichen horizontale Drehachse an.

Die Plattform 2, die im dargestellten Ausführungsbeispiel den Boden einer Wanne bildet, weist neben dem Aufnahmebereich 2a einen Entnahmebereich 2b auf. Beim nach unten Kippen der Plattform 2 gleiten die im Aufnahmebereich 2a abgelegten Leitungen 8 hin zum Entnahmebereich 2b.

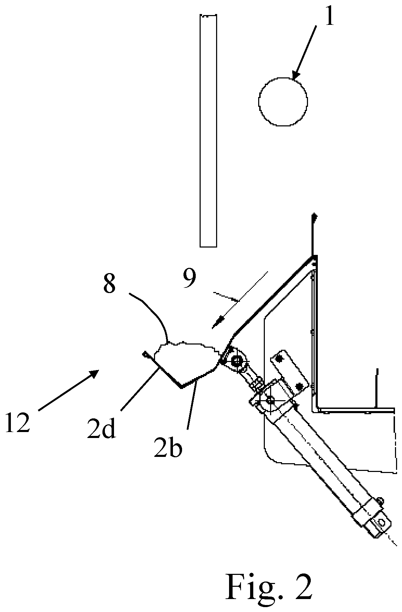

Fig. 2 zeigt die Plattform 2 in gekipptem Zustand. Die Leitungen 8 sind bereits in den Entnahmebereich 2b gerutscht. Die Gleitrichtung 9 deutet dabei die Bewegungsrichtung der Leitungen 8 an.

In der dargestellten Ausführungsform bildet die Plattform 2 den Boden einer Wanne. Die linke Seitenwand 2d der Wanne begrenzt die Bewegung der Leitungen 8 während des Kippens der Plattform 2 und hält als Haltemittel 2d die Leitungen 8 im Entnahmebereich 2b. Grundsätzlich sind (alternativ zu einer Seitenwand) auch andere Haltemittel denkbar, die die Leitungen 8, insbesondere im gekippten Zustand der Plattform 2, halten. Als Haltemittel wären z.B. auch ein Gitter oder nach oben ragende Stäbe geeignet, die in bestimmten Abständen an der Plattform 2 angeordnet sind. In einer Variante könnte es sich beim Haltemittel auch um ein stationäres Haltemittel handeln, das nicht an der Plattform 2 befestigt ist, z.B. ein Haltemittel, das eine gewölbte Kontur aufweist, die der äusserste Rand des Entnahmebereiches beim Kippen zeichnet.

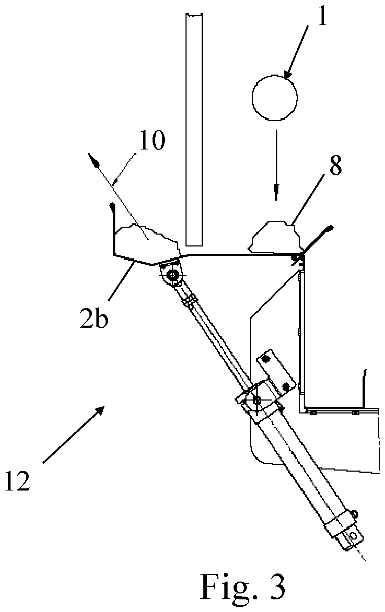

Fig. 3 zeigt die Plattform 2 wieder in nach oben geschwenktem Zustand, wobei die zuvor in den Entnahmebereich 2b gerutschten Leitungen 8 im Entnahmebereich 2b verbleiben. Dies wird vorzugsweise durch eine Vertiefung in der Plattform 2 im Entnahmebereich 2b gefördert. Während nun die Leitungen 8 aus dem Entnahmebereich 2b entnommen werden können, wie dies durch die Entnahmerichtung 10 schematisch angedeutet wird, gelangen bereits neu verarbeitete Leitungen 8 vom Prozessbereich 1 auf den Aufnahmebereich 2a.

Vorzugsweise befindet sich zwischen dem Prozessbereich 1 und dem Bedienbereich 6, von dem aus die Leitungen 8, z.B. durch eine Bedienperson, entnommen werden können, eine Trennwand 4, die gleichzeitig den Aufnahmebereich 2a vom Entnahmebereich 2b abgrenzt. Damit die Bedienperson den Prozessbereich 1 überwachen kann ist die Trennwand vorzugsweise durchsichtig, z.B. aus Plexi-Glas. Die Trennwand 4 kann z.B. Teil einer Schutzhaube sein, die als Ganzes schwenkbar ist, um den Prozessbereich 1 bei Reinigungs-, Reparatur- und/oder Wartungsarbeiten von aussen zugänglich zu machen.

Die Plattform 2 ist vorzugsweise vollflächig, z.B. aus einem Blech, gefertigt. Die Plattform 2 könnte aber auch als Gitter oder aus einzelnen miteinander verbundenen Streben gebildet sein. Sie muss lediglich die Leitungen 8 aufnehmen können. Grundsätzlich kann die Plattform 2 jede beliebige Form annehmen. In der bevorzugten Ausführungsform bildet sie den Boden einer Wanne. Die Seitenwände 2c, 2d der Wanne verhindern zuverlässig, dass Leitungen 8 ungewünscht von der Plattform 2 fallen.

Der Aktuator 11, der das Kippen der Plattform 2 bewerkstelligt, könnte selbstverständlich auch ein Motor oder ein anderer Antrieb sein. Auch kann der Aktuator 11 direkt oder indirekt an einer anderen Stelle als in den Figuren 1 bis 3 dargestellt an der Plattform angreifen.

Im Folgenden wird das erfindungsgemässe Verfahren anhand der einzelnen Figuren näher beschrieben:
Fig. 1: Unterhalb des Prozessbereiches 1 ist die Kippwanne 2 über die Drehachse 3 mit dem Maschinengestell 5 verbunden. Die Kippwanne kann mit einem pneumatischen Antrieb 11 ausgehend von der Horizontalen nach unten geklappt werden (vorzugsweise um etwa 45°). Im Prozessbereich 1 entstehen Leitungsprodukte, die nach Fertigstellung bzw. nach einem Verfahrensschritt herabfallen (Abwurfrichtung 7) und das Leitungsbündel 8 bilden.
Fig. 2: Ist das Los abgearbeitet, so schwenkt die Plattform 2 nach unten (im bevorzugten Ausführungsbeispiel um etwa 45°). Das Leitungsbündel 8 rutscht dabei schwerkraftbedingt in den Entnahmebereich 2b, der vorzugsweise durch eine Vertiefung bzw. Mulde gekennzeichnet ist.

Nach einem kurzen Moment schwenkt die Plattform 2 wieder in die (im Wesentlichen horizontale) Ausgangsstellung, wobei die Leitungen 8 wieder angehoben werden, aber im Entnahmebereich 2b verbleiben.

Fig. 3: Das Leitungsbündel 8 kann dann vom Bedienbereich 6 aus einfach entnommen werden. Die Kabelsammelvorrichtung (wire stacker) 12 kann währenddessen fortfahren, Leitungen 8 aus dem Prozessbereich 1 auf die kippbare Plattform 2 abzuwerfen. Eine Unterbrechung des Verarbeitungsvorgangs während der Entnahme der Leitungen aus dem Entnahmebereich 2b ist nicht erforderlich.

Die Offenbarung der folgenden Anmeldungen: S124PWO, S125PWO, S127PWO, S141PWO (Interne Aktenzeichen der Anmelderin), die alle am selben Tag, dem 9.11.2012, beim internationalen Büro (IB) hinterlegt wurden, bilden einen integrierten Bestandteil der vorliegenden Anmeldung und sind in Kombination mit derselben zu sehen, da diese separaten Anmeldungen jeweils verschiedene Aspekte derselben Maschine betreffen. Daraus ergeben sich weitere synergistische Effekte.

### Bezugszeichenliste

- 1 -: Prozessbereich
- 2 -: Plattform
- 2a -: Aufnahmebereich
- 2b -: Entnahmebereich
- 2c -: Seitenwand
- 2d -: Seitenwand
- 3 -: Drehachse
- 4 -: Trennwand
- 5 -: Maschinengestell
- 6 -: Bedienbereich
- 7 -: Abwurfrichtung
- 8 -: Leitung
- 9 -: Gleitrichtung
- 10 -: Entnahmerichtung
- 11 -: Aktuator
- 12 -: Kabelsammelvorrichtung (wire stacker)

## Patentansprüche

1. Kabelsammelvorrichtung (wire stacker) (12) zur Verarbeitung von elektrischen oder optischen Leitungen (8), wie Drähten, Kabeln, Leitungsbündel, Lichtleitfasern, etc., mit einer nach unten kippbaren Plattform (2), die einen Aufnahmebereich (2a) zum Aufnehmen einer oder mehrerer Leitungen (8) nach einem Verarbeitungsschritt aufweist, wobei die Plattform (2) einen an den Aufnahmebereich (2a) anschliessenden Entnahmebereich (2b) aufweist, wobei im Aufnahmebereich (2a) befindliche Leitungen (8) durch nach unten Kippen der Plattform (2) in den Entnahmebereich (2b) bringbar sind, aus dem die Leitungen (8) entnommen werden können, und wobei die Leitungen (8) in der gekippten Position der Plattform (2) durch Haltemittel (2d) im Entnahmebereich (2b) gehalten werden, **dadurch gekennzeichnet, dass** zum Kippen der Plattform (2) ein Aktuator (11) vorgesehen ist, wobei durch Betätigen des mit der Plattform (2) zusammenwirkenden Aktuators (11) der Kippvorgang nach unten und das Wiederzurückschwenken nach oben ermöglicht ist.

2. Kabelsammelvorrichtung (wire stacker) nach Anspruch 1, **dadurch gekennzeichnet, dass** der Aufnahmebereich (2a) und der Entnahmebereich (2b) während der Verarbeitung der Leitungen (8) in nach oben geschwenkter Position im Wesentlichen in gleicher Höhe liegen.

3. Kabelsammelvorrichtung (wire stacker) nach Anspruch 1 oder 2, **dadurch gekennzeichnet, dass** das Haltemittel (2d) an der Plattform (2) befestigt ist.

4. Kabelsammelvorrichtung (wire stacker) nach zumindest einem der Ansprüche 1 bis 3, **dadurch gekennzeichnet, dass** die Plattform (2) den Boden einer Wanne bildet.

5. Kabelsammelvorrichtung (wire stacker) nach Anspruch 4, **dadurch gekennzeichnet, dass** das Haltemittel durch eine Seitenwand (2d) der Wanne gebildet ist.

6. Kabelsammelvorrichtung (wire stacker) nach zumindest einem der vorhergehenden Ansprüche, **dadurch gekennzeichnet, dass** die Plattform (2) um eine im Wesentlichen horizontale Drehachse (3) schwenkbar ist, wobei vorzugsweise die Drehachse (3) im Bereich der Unterseite des Aufnahmebereiches (2a) vorgesehen ist.

7. Kabelsammelvorrichtung (wire stacker) nach zumindest einem der vorhergehenden Ansprüche, **dadurch gekennzeichnet, dass** der Aktuator (11) im Bereich der Unterseite des Entnahmebereiches (2b) angreift, wobei vorzugsweise der Aktuator (11) ein pneumatischer Aktuator ist.

8. Kabelsammelvorrichtung (wire stacker) nach zumindest einem der vorhergehenden Ansprüche, **dadurch gekennzeichnet, dass** die Kabelsammelvorrichtung (wire stacker) (12) eine vorzugsweise durchsichtige Trennwand (4) aufweist, die einen Prozessbereich (1) von einem Bedienbereich (6) trennt und von oben in Richtung Plattform (2) ragt.

9. Kabelsammelvorrichtung (wire stacker) nach Anspruch 8, **dadurch gekennzeichnet, dass** die Trennwand (4) zumindest teilweise in die Wanne (2) zwischen Aufnahmebereich (2a) und Entnahmebereich (2b) hineinreicht.

10. Kabelsammelvorrichtung (wire stacker) nach zumindest einem der vorhergehenden Ansprüche, **dadurch gekennzeichnet, dass** im Entnahmebereich (2b) der Boden der Plattform (2) eine Vertiefung aufweist, um dort die Leitungen (8) besser in Position zu halten.

11. Kabelsammelvorrichtung (wire stacker) nach einem der vorhergehenden Ansprüche, **dadurch gekennzeichnet, dass** die Plattform (2) im Aufnahmebereich (2a) im Wesentlichen eben ist.

12. Kabelsammelvorrichtung (wire stacker) nach zumindest einem der vorhergehenden Ansprüche, **dadurch gekennzeichnet, dass** die Kabelsammelvorrichtung (wire stacker) (12) eine Kabelverdrillvorrichtung ist und die Plattform (2) zur Aufnahme der verdrillten Kabel vorgesehen ist.

13. Kabelsammelvorrichtung (wire stacker) nach einem der vorhergehenden Ansprüche, **dadurch gekennzeichnet, dass** in dem wieder nach oben geschwenkten Zustand der Plattform (2) die durch nach unten Kippen der Plattform (2) in den Entnahmebereich (2b) gebrachten Leitungen (8) aus dem Entnahmebereich (2b) entnehmbar sind.

14. Verfahren zum Entnehmen von elektrischen oder optischen Leitungen (8), wie Drähten, Kabeln, Leitungsbündel, Lichtleitfasern, etc., aus einer Kabelsammelvorrichtung (wire stacker) (12) mit einer nach unten kippbaren Plattform (2), die einen Aufnahmebereich (2a) zum Aufnehmen einer oder mehrerer Leitungen (8) nach einem Verarbeitungsschritt aufweist, wobei die Plattform (2) einen an den Aufnahmebereich (2a) anschliessenden Entnahmebereich (2b) aufweist, wobei im Aufnahmebereich (2a) befindliche Leitungen (8) durch nach unten Kippen der Wanne (2) in den Entnahmebereich (2b) gebracht werden und in der gekippten Position der Plattform (2) durch Haltemittel (2d) im Entnahmebereich (2b) gehalten werden, und dass die Leitungen (8) aus dem Entnahmebereich (2b) entnommen werden, **dadurch gekennzeichnet, dass** die Plattform (2) vor dem Entnehmen der Leitungen (8) aus dem Entnahmebereich (2b) wieder nach oben gekippt wird.

15. Verfahren nach Anspruch 14, **dadurch gekennzeichnet, dass** die Kabelsammelvorrichtung (wire stacker) (12) nach einem der Ansprüche 1 bis 13 ausgebildet ist.

## Claims

1. A cable-gathering apparatus (wire stacker) (12) for processing electrical or optical lines (8) such as wires, cables, line bundles, optical fibres and the like, comprising a platform (2) that can be tilted downwards, which platform has an accommodating region (2a) for accommodating one or more lines (8) after a processing step, wherein the platform (2) has a removal region (2b) adjacent to the accommodating region (2a), wherein lines (8) located in the accommodating region (2a) can be brought into the removal region (2b) by tilting the platform (2) downwards, from which removal region the lines (8) can be removed, and wherein the lines (8) are retained in the removal region (2b) by retaining means (2d) when the platform (2) is in the tilted position, **characterized in that** an actuator (11) is provided in order to tilt the platform (2), wherein the downward tilting operation and the swivelling for returning upwards to the original position are enabled by operating the actuator (11) which cooperates with the platform (2).

2. The cable-gathering apparatus (wire stacker) according to claim 1, **characterized in that** during processing of the lines (8) in the upwardly swivelled position the accommodating region (2a) and the removal region (2b) are substantially on the same level.

3. The cable-gathering apparatus (wire stacker) according to claim 1 or 2, **characterized in that** the retaining means (2d) is fastened to the platform (2).

4. The cable-gathering apparatus (wire stacker) according to at least one of claims 1 to 3, **characterized in that** the platform (2) forms the bottom of a tray.

5. The cable-gathering apparatus (wire stacker) according to claim 4, **characterized in that** the retaining means is formed by a side wall (2d) of the tray.

6. The cable-gathering apparatus (wire stacker) according to at least one of the preceding claims, **characterized in that** the platform (2) is pivotable about a substantially horizontal axis of rotation (3), wherein the axis of rotation (3) is preferably provided in the region of the underside of the accommodating region (2a).

7. The cable-gathering apparatus (wire stacker) according to at least one of the preceding claims, **characterized in that** the actuator (11) engages in the region of the underside of the removal region (2b), wherein the actuator (11) is preferably a pneumatic actuator.

8. The cable-gathering apparatus (wire stacker) according to at least one of the preceding claims, **characterized in that** the cable-gathering apparatus (wire stacker) (12) has a preferably transparent dividing wall (4) which separates a process area (1) from an operation area (6) and protrudes towards the platform (2) from above.

9. The cable-gathering apparatus (wire stacker) according to claim 8, **characterized in that** the dividing wall (4) extends at least partially into the tray (2) between the accommodating region (2a) and the removal region (2b).

10. The cable-gathering apparatus (wire stacker) according to at least one of the preceding claims, **characterized in that** the bottom of the platform (2) in the withdrawal region (2b) has a recess that enables the lines (8) to be held in position better.

11. The cable-gathering apparatus (wire stacker) according to any one of the preceding claims, **characterized in that** in the accommodating region (2a) the platform (2) is substantially flat.

12. The cable-gathering apparatus (wire stacker) according to at least one of the preceding claims, **characterized in that** the cable-gathering apparatus (wire stacker) (12) is a cable twisting apparatus and the platform (2) is provided for accommodating the twisted cables.

13. The cable-gathering apparatus (wire stacker) according to any one of the preceding claims, **characterized in that** the lines (8) which have been brought into the removal region (2b) by downward tilting of the platform (2) can be removed from the removal region (2b) when the platform (2) is again in the upwardly swivelled position.

14. A method for the removal of electrical or optical lines (8) such as wires, cables, line bundles, optical fibres and the like, from a cable-gathering apparatus (wire stacker) (12) with a platform (2) that can be tilted downwards, which platform has an accommodating region (2a) for accommodating one or more lines (8) after a processing step, wherein the platform (2) has a removal region (2b) adjacent to the accommodating region (2a), wherein lines (8) located in the accommodating region (2a) are brought into the removal region (2b) by tilting the tray (2) downwards and are retained in the removal region (2b) by retaining means (2d) when the platform (2) is in the tilted position, and that the lines (8) are removed from the removal region (2b), **characterized in that** the platform (2) is tilted upwards again before the lines (8) are removed from the removal region (2b).

15. The method according to claim 14, **characterized in that** the cable-gathering apparatus (wire stacker) (12) is constructed according to any one of claims 1 to 13.

## Revendications

1. Dispositif empileur de câbles (12) destiné au traitement de conducteurs électriques ou optiques (8), comme des fils, des câbles, des faisceaux de câbles, des fibres optiques, etc. avec une plateforme (2) basculable vers le bas, qui comporte une zone de réception (2a) pour recevoir un ou plusieurs conducteurs (8) après une étape de traitement, sachant que la plateforme (2) comporte une zone d'enlèvement (2b) consécutive à une zone de réception (2a), sachant que les conducteurs (8) se trouvant dans la zone de réception (2a) peuvent être mis dans la zone d'enlèvement (2b) par un basculement vers le bas de la plateforme (2) à partir de laquelle les conducteurs (8) peuvent être enlevés, et sachant que les conducteurs (8) sont maintenus dans la position basculée de la plateforme (2) par un moyen de retenue (2d) dans la zone d'enlèvement (2b), **caractérisé en ce que** pour le basculement de la plateforme (2), un actionneur (11) est prévu, sachant qu'en actionnant l'actionneur (11) coopérant avec la plateforme (2), l'opération de basculement vers le bas et le repivotement vers le haut sont autorisés.

2. Dispositif empileur de câbles selon la revendication 1, **caractérisé en ce que** la zone de réception (2a) et la zone d'enlèvement (2b) se trouvent pour l'essentiel à la même hauteur dans la position pivotée vers le haut pendant le traitement des conducteurs (8).

3. Dispositif empileur de câbles selon la revendication 1 ou 2, **caractérisé en ce que** le moyen de retenue (2d) est fixé à la plateforme (2) .

4. Dispositif empileur de câbles selon au moins l'une quelconque des revendications 1 à 3, **caractérisé en ce que** la plateforme (2) forme le fond d'une cuve.

5. Dispositif empileur de câbles selon la revendication 4, **caractérisé en ce que** le moyen de retenue est formé par une paroi latérale (2d) de la cuve.

6. Dispositif empileur de câbles selon au moins l'une quelconque des revendications précédentes, **caractérisé en ce que** la plateforme (2) peut être pivotée pour l'essentiel autour d'un axe de rotation horizontal (3), sachant que de préférence l'axe de rotation (3) est prévu dans la zone de la face inférieure de la zone de réception (2a).

7. Dispositif empileur de câbles selon au moins l'une quelconque des revendications précédentes, **caractérisé en ce que** l'actionneur (11) vient en prise dans la zone de la face inférieure de la zone d'enlèvement (2b), sachant que de préférence l'actionneur (11) est un actionneur pneumatique.

8. Dispositif empileur de câbles selon au moins l'une quelconque des revendications précédentes, **caractérisé en ce que** le dispositif empileur de câbles (12) comporte de préférence une paroi de séparation transparente (4), qui sépare une zone de processus (1) d'une zone de manipulation (6) et s'élève du haut en direction de la plateforme (2).

9. Dispositif empileur de câbles selon la revendication 8, **caractérisé en ce que** la paroi de séparation (4) pénètre au moins en partie dans la cuve (2) entre la zone de réception (2a) et la zone d'enlèvement (2b).

10. Dispositif empileur de câbles selon au moins l'une quelconque des revendications précédentes, **caractérisé en ce que** dans la zone d'enlèvement (2b), le fond de la plateforme (2) comporte une cavité pour mieux y maintenir les conducteurs (8) en position.

11. Dispositif empileur de câbles selon au moins l'une quelconque des revendications précédentes, **caractérisé en ce que** la plateforme (2) est pour l'essentiel plane dans la zone de réception (2a).

12. Dispositif empileur de câbles selon au moins l'une quelconque des revendications précédentes, **caractérisé en ce que** le dispositif empileur de câbles (12) est un dispositif de torsadage de câbles et la plateforme (2) est prévue pour recevoir les câbles torsadés.

13. Dispositif empileur de câbles selon l'une quelconque des revendications précédentes, **caractérisé en ce qu'**à l'état à nouveau pivoté vers le haut de la plateforme (2), les conducteurs (8) mis dans la zone d'enlèvement (2b) par le basculement vers le bas de la plateforme (2) peuvent être enlevés de la zone d'enlèvement (2b).

14. Procédé destiné à l'enlèvement de conducteurs électriques ou optiques (8), comme des fils, des câbles, des faisceaux de câbles, des fibres optiques etc, d'un dispositif empileur de câbles (12) avec une plateforme (2) basculable vers le bas, qui comporte une zone de réception (2a) pour recevoir un ou plusieurs conducteurs (8) après une étape de traitement, sachant que la plateforme (2) comporte une zone d'enlèvement (2b) consécutive à la zone de réception (2a), sachant que les conducteurs (8) se trouvant dans la zone de réception (2a) peuvent être mis dans la zone d'enlèvement (2b) par basculement vers le bas de la cuve (2) et être maintenus dans la position basculée de la plateforme (2) par un moyen de retenue (2d) dans la zone d'enlèvement (2b) et en ce que les conducteurs (8) sont enlevés de la zone d'enlèvement (2b), **caractérisé en ce que** la plateforme (2) est à nouveau basculée vers le haut avant l'enlèvement des conducteurs (8) de la zone d'enlèvement (2b).

15. Procédé selon la revendication 14, **caractérisé en ce que** le dispositif empileur de câbles (12) est constitué selon l'une quelconque des revendications 1 à 13.
